# EUROPÄISCHE PATENTSCHRIFT

(11) **EP 2 642 848 B1**
(45) Veröffentlichungstag und Bekanntmachung des Hinweises auf die Patenterteilung: **17.12.2014**
(21) Anmeldenummer: 11785418.2
(22) Anmeldetag: 21.11.2011
(51) Int. Cl.: A01M 1/22, A01K 31/12

(54) **VORRICHTUNG UND VERFAHREN ZUM BEKÄMPFEN VON VOGELPARASITEN**
DEVICE AND METHOD FOR CONTROLLING AVIAN PARASITES
DISPOSITIF ET PROCÉDÉ POUR LUTTER CONTRE DES PARASITES D'OISEAUX

(30) Priorität: 22.11.2010 DE 102010052152
(43) Veröffentlichungstag der Anmeldung: 02.10.2013
(73) Patentinhaber: Universität Hohenheim, 70593 Stuttgart (DE)
(72) Erfinder: BESSEI, Werner, 73765 Neuhausen (DE); POPP, Christina, 70806 Kornwestheim (DE); BESSEI, Herbert, 55545 Bad Kreuznach (DE); MANTON, Angie, 70794 Filderstadt-Plattenhardt (DE)
(74) Vertreter: Elbel, Michaela
(86) Internationale Anmeldenummer: PCT/EP2011/070546
(87) Internationale Veröffentlichungsnummer: WO 2012/069406

(56) Entgegenhaltungen:
- DE-A1-102008 003 394
- GB-A- 214 441

## Beschreibung

### Gebiet der Erfindung

Die Erfindung betrifft eine Vorrichtung und ein Verfahren zur Bekämpfung von Parasiten in einer Behausung für Vögel.

### Hintergrund der Erfindung

Eines der bedeutendsten Probleme bei der Haltung von Vögeln, sowohl zu privaten wie auch zu gewerblichen Zwecken, ist der Befall der Tiere mit Ektoparasiten. Die Vögel werden unter anderem von Läusen (*Phthiraptera*) und Milben (*Acari*) befallen. Von besonderer Bedeutung ist dabei der Befall von Geflügel durch Mitglieder der parasitierenden Gattung *Dermanyssus* wie der Rote Vogelmilbe (*Dermanyssus gallinae*) und der Nordischen Vogelmilbe (*Ornithonyssus sylviarum*). Die Roten Vogelmilben sind Nestparasiten, die Wirtstiere zur Blutausnahme nachts, für ca. 30 min, befallen und sich anschließend in Ritzen und Spalten in der Nähe des Wirts zurückziehen. Dort bilden sie große Gruppen, sogenannte Aggregate, in denen sie sich entwickeln und ihre Eier legen. Die Rote Vogelmilbe zeigt keine Wirtsspezifität, sondern befällt viele unterschiedliche Arten von Vögeln aber auch Säuger, wie beispielsweise Haustiere, Schafe und Mäuse. In Ausnahmefällen kann die Rote Vogelmilbe auch Menschen befallen, wodurch Viren und Bakterien, denen die Milbe als Reservoir dient, übertragen werden.

Der Befall von Zuchtgeflügel durch Parasiten, insbesondere durch die Rote Vogelmilbe, führt zu beträchtlichen wirtschaftlichen Schäden. Befallene Tiere zeigen eine reduzierte Legetätigkeit, erhöhten Nahrungsverbrauch und eine verlangsamte Entwicklung. Bei starkem Milbenbefall kommt es zu akuter Anämie, die häufig zum Tod des Vogels führt. Außerdem dienen Milben vielen Krankheitserregern, wie Salmonellen, Spirochaeten und Pockenviren als Zwischenwirt, so dass ein Milbenbefall häufig mit weiteren Erkrankungen einhergeht.

Herkömmliche Bekämpfungsmaßnahmen beschränken sich vorwiegend auf den Einsatz chemischer Akarizide (DE 10 2005 031 976 A1) und Silikatstaub (DE 10 2008 006 683 A1). Auf Grund ihrer hohen Giftigkeit und der stetig steigenden gesetzlichen Anforderungen an die Verträglichkeit von Schädlingsbekämpfungsmaßnahmen (Biozidrichtlinie, Arzneimittelgesetze) sind nur wenige Akariziden zugelassen. Hinzu kommen zunehmende, teilweise multiple Resistenzen der Milben gegenüber den handelsüblichen Akariziden. Alternativ zu Akariziden werden daher Tiere und Stallungen mit Silikatstaub behandelt, der die Fortbewegung der Parasiten hemmt und ihre Austrocknung fördert. Nachteil dieser Behandlung ist die starke Staubbelastung für Tiere und Menschen. Daneben werden Parasitenfallen mit Akariziden verwendet (Chirico J. und Tauson R., 2002, DE 198 08 745 A1), die aber durchschnittlich einmal pro Woche ausgewechselt werden müssen. Dies verlangt hohen Personalaufwand und stört die Tiere durch das regelmäßige Betreten des Stalles. Außerdem ist eine regelmäßige und umfangreiche Reinigung und Desinfektion der Stallungen notwendig, wozu sämtliche Vögel umquartiert werden müssen. Diese Maßnahmen sind mit großem zeitlichem, personellem und finanziellem Aufwand verbunden und führen zu einer zusätzlichen Belastung der Vögel.

Die US 214,441 beschreibt eine Vogelsitzstange, die nicht unmittelbar mit den Wänden oder dem Boden der Behausung in Kontakt steht, sondern durch ein Desinfektionsmittel davon getrennt ist. Dadurch wird verhindert, dass Parasiten vom Boden oder von den Wänden auf die Sitzstange und somit zu den Vögeln gelangen können.

Die DE 10 2008 003 394 A1 beschreibt eine Vorrichtung zur Vernichtung von Ungeziefer. Mittels der Vorrichtung wird das Ungeziefer über einen Luftstrom in einen Förderkanal gesaugt. Entlang des Förderkanals ist eine Strahlungseinrichtung angebracht, die eine das Ungeziefer abtötende Strahlung aussendet.

Es besteht daher ein Bedarf nach einer kostengünstigen Vorrichtung zur Bekämpfung und Prävention des Parasitenbefalls von Vögeln, dessen Verwendung mit geringem Personaleinsatz auskommt, entsprechend kostengünstig ist und die Vögel in ihrem Tagesablauf ungestört lässt.

### Zusammenfassung der Erfindung

Die vorliegende Erfindung betrifft einen länglichen Hohlkörper zur Bekämpfung von Parasiten in einer Behausung für Vögel, mit mindestens einer Öffnung in der Wand des Hohlkörpers, zur Aufnahme der Parasiten ins Innere des Hohlkörpers und einem im Inneren lösbar angeordneten Mittel zum Abtöten der Parasiten, wobei das Mittel vorbestimmt aktivierbar ist und eine elektromagnetische Strahlung emittiert, und der Hohlkörper (1) ein Sitzelement ist und während des Abtötens der Parasiten in der Behausung verbleibt.

Die Erfindung betrifft weiter ein Verfahren zur Bekämpfung von Parasiten in einer Behausung für Vögel mittels eines entsprechenden Hohlkörpers, wobei die Parasiten im Inneren des Hohlkörpers, in dem sie sich sammeln abgetötet werden.

### Kurzbeschreibung der Figuren

Figur 1A zeigt einen länglichen Hohlkörper (1) im Querschnitt, mit einem elektrischen Leiter (2) im Inneren. Figur 1B zeigt eine Isolierscheibe (3).
Figur 2A zeigt eine Sitzstange (11) für Vögel, mit zwei Heizleiter (12) zum Abtöten von Parasiten. Figur 2B zeigt einen thermoplastischen Isolator (13).
Figur 3A zeigt eine Sitzstange (11) für Vögel, mit einem Mittel zum Abtöten von Parasiten im Inneren. Figur 3B zeigt einen Ausschnitt aus Figur 3A, der einen Schlitten (23) darstellt, in dem ein Mikrowellensender (32) angeordnet ist.
Figur 4A zeigt eine Sitzstange (11) für Vögel, mit einem Mittel zum Abtöten von Parasiten im Inneren. Figur 4B zeigt einen Ausschnitt aus Figur 4A, der einen Schlitten (23) darstellt, in dem eine Infrarotlampe (42) angeordnet ist.

### Detaillierte Beschreibung der Erfindung

In einem ersten Aspekt betrifft die Erfindung einen länglichen Hohlkörper zur Bekämpfung von Parasiten in einer Behausung für Vögel, mit mindestens einer Öffnung in der Wand des Hohlkörpers, zur Aufnahme der Parasiten ins Innere des Hohlkörpers, und einem im Inneren lösbar angeordneten Mittel zum Abtöten der Parasiten. Indem das Mittel vorbestimmt aktivierbar ist und eine elektromagnetische Strahlung emittiert, werden Parasiten, die sich im Inneren des Hohlkörpers befinden abgetötet. Die Parasiten, von denen die Vögel befallen werden, kriechen selbständig durch die Öffnungen ins Innere des Hohlkörpers, um sich dort in der Dunkelheit zu verstecken. Im Inneren des Hohlkörpers werden die Parasiten abgetötet. Hierzu dient ein Mittel, das im Inneren des Hohlkörpers angeordnet ist und das im aktiven Zustand eine elektromagnetische Strahlung emittiert. Die Strahlung tötet die Parasiten ohne den Vögeln zu schaden. Durch die Verwendung von elektromagnetischer Strahlung zum Abtöten der Parasiten kann auf Gifte, Insektizide und Silikatstaub verzichtet werden. Dadurch wird die Gesundheitsbelastung für Mensch und Vogel erheblich reduziert. Zudem ist das Mittel vorbestimmt aktivierbar, das heißt es kann beliebig oft und gezielt an und ab geschalten werden. Dadurch wird die elektromagnetische Strahlung nicht ununterbrochen emittiert. Außerdem kann das Mittel, je nach Bedarf, in frei wählbaren Intervallen eingesetzt werden. Jedes Mal wenn das Mittel in Gang gesetzt wird, werden die Parasiten im Inneren getötet, so dass, durch wiederholtes Aktivieren des Mittels, wiederholt und damit wirkungsvoll Parasiten abgetötet werden. Einmal in die Behausung der Vögel eingebaut, verbleibt der Hohlkörper dort ohne dass er nach dem Abtöten der Parasiten entnommen oder ersetzt werden muss. In der Zeit zwischen den Phasen, in denen das Mittel betätigt wird, verbleibt das Mittel innerhalb des Hohlkörpers. Ebenso braucht der Hohlkörper nicht aus der Behausung der Vögel entfernt werden, nachdem das Mittel abgeschaltet wurde. Dadurch können unnötige Störungen der Vögel, beispielsweise durch Betreten der Stallungen, vermieden werden. Bei Bedarf, zum Reinigen des Hohlkörpers oder bei einer Umgestaltung der Behausung, kann das lösbar angeordnete Mittel aus dem Hohlkörper entfernt werden.

In einer bevorzugten Ausführungsform ist der Hohlkörper ein Sitzelement für Vögel, vorzugsweise eine Sitz- oder Anflugstange, weiter bevorzugt eine Sitzstange an einem Ruheplatz innerhalb der Behausung. Parasiten halten sich stets auf oder in unmittelbarer Nähe ihres Wirts auf. Verlassen die Parasiten ihren Wirt, beispielsweise zum Ablegen von Eiern, bleiben sie in der Nähe der Schlaf- und Nistplätze des Wirts. In freier Natur ruhen Vögel entweder in Nestern oder auf Baumästen. In der Vogelhaltung werden solche Sitzgelegenheiten durch Sitzelemente wie Bretter, Sitz- oder Anflugstangen, bereitgestellt. Herkömmliche Sitzelemente sind dabei vollständig abgeschlossen und zeigen weder Löcher noch Ritzen, um Parasiten keine Rückzugsmöglichkeiten zu bieten. Im Gegensatz hierzu weist der erfindungsgemäße Hohlkörper mindestens eine Öffnung in seiner Wand auf, um Parasiten gezielt ins Innere des Hohlkörpers zu locken, wo sie abgetötet werden. Behausungen, in denen bereits hohle, aber abgeschlossene Sitzelemente vorhanden sind, können mit dem erfindungsgemäßen Hohlkörper nachgerüstet werden, indem Löcher in das Sitzelement eingefügt werden und das Mittel zum Abtöten der Parasiten darin lösbar angeordnet wird. Alternativ hierzu kann der Hohlkörper zusätzlich zu bereits vorhandenen, gegebenenfalls massiven, Sitzelementen und unmittelbar unter diesen angeordnet werden. Der erfindungsgemäße Hohlkörper kann daher in unterschiedliche, bereits bestehende, Behausungen integriert werden, ohne dass vorhandene Sitzelemente entfernt werden müssen.

In einer bevorzugten Ausführungsform weist der Hohlkörper einen Durchmesser von ca. 0,5 bis ca. 10 cm, vorzugsweise von ca. 2 bis ca. 8 cm, weiter bevorzugt von ca. 3 bis ca. 6 cm auf. Der Durchmesser des Hohlkörpers kann entsprechend des in der Behausung gehaltenen Vogels beliebig gewählt werden. Dabei bietet sich ein geringerer Durchmesser bei der Haltung von kleinen Vögeln, wie Ziervögeln oder Tauben an. Für die Haltung von Hühnern sollte der Durchmesser der Sitzstangen vorzugsweise zwischen ca. 3 und ca. 6 cm liegen. Für größere Vögel, wie beispielsweise für in zoologischen Gärten gehaltene Greifvögel, kann der Durchmesser des Hohlkörpers entsprechend größer gewählt werden. Darüber hinaus kann der Hohlkörper in seiner Länge der Behausung der Vögel angepasst werden. So kann der Hohlkörper eine Länge von ca. 0,1 bis ca. 10 m, vorzugsweise von ca. 1 bis ca. 5 m aufweisen. Unter Verwendung von entsprechenden Stützelementen kann der Hohlkörper auch auf über 10 m ausgedehnt werden, wie es beispielsweise für Mastbetriebe in industriellem Maßstab benötigt wird.

In einer bevorzugten Ausführungsform weist der Hohlkörper im Inneren Lockstoffe auf. Durch die Verwendung von Lockstoffen, beispielsweise Pheromonen, können Parasiten gezielt in das Innere des Hohlkörpers gelockt werden. Dadurch wird die Effizienz, mit der die Parasiten bekämpft werden, gesteigert. Außerdem können mit geeigneten Lockstoffen auch Parasiten ins Innere der Hohlräume gelockt werden, die sich nicht natürlicherweise in Verstecke zurückziehen.

Gemäß einer bevorzugten Ausführungsform ist der Hohlkörper aus Holz, Metall oder Kunststoff, vorzugsweise aus Stahl, Edelstahl, PVC oder aus Kombinationen dieser Werkstoffe ausgebildet. Insbesondere Edelstahl und Kunststoff sind leicht zu pflegen und besonders widerstandsfähig. Außerdem kann die Form des Querschnitts des Hohlkörpers entsprechend den Bedürfnissen des Vogels individuell gestaltet werden. So kann der Hohlkörper einen gleichförmigen, beispielsweise runden, ovalen, quadratischen oder rechteckigen Querschnitt aufweisen.

In einer bevorzugten Ausführungsform ist der Parasit ein Ektoparasit, vorzugsweise eine Zecke oder Vogelmilbe. Ektoparasiten sind in der Lage, ihren Wirt zu verlassen und, zumindest kurzfristig, ohne direkten Kontakt zu ihrem Wirt zu überleben. Sie können daher, gegebenenfalls indem sie Lockstoffen folgen, ins Innere der Hohlkörper kriechen, wo sie durch elektromagnetische Strahlung abgetötet werden. Der erfindungsgemäße Hohlkörper ist insbesondere geeignet, um die Rote Vogelmilbe zu bekämpfen, da sich dieser Parasit selbständig vom Wirt zurückzieht und einen Großteil seines Lebenszyklus in dunklen Verstecken verbringt. Dort kommt es auch zur Eiablage und zur Entwicklung der Larvenstadien. Der Hohlkörper ist daher besonders geeignet um neben adulten Parasiten auch deren Eier und Entwicklungsstadien abzutöten. Ektoparasiten, wie die Rote Vogelmilbe, befallen viele verschiedene Arten von Vögeln, vor allem Hühner. Bei der Behausung für Vögel kann es sich daher um einen Geflügelstall für Gänse, Enten, Truthühner, vorzugsweise für Hühner, einen Taubenschlag, ein Vogelhaus, einen Nistkasten, ein Vogelgehege oder um einen Vogelkäfig für Nutz- und/oder Ziervögel handeln.

In einer bevorzugten Ausführungsform weist der Hohlkörper mehrere Öffnungen in der Wand auf, vorzugsweise in einem Abstand zueinander in Längsrichtung von ca. 1 bis ca. 20 cm und weiter bevorzugt mit einem Durchmesser, der das 0,2- bis 0,3-fache des Durchmessers des Hohlkörpers beträgt. Die Parasiten gelangen ins Innere des Hohlkörpers, indem sie den Wirt verlassen und durch die Öffnungen des Hohlkörpers kriechen. Da die Distanz, die die Parasiten üblicherweise zurücklegen, nicht besonders groß ist, sollten die Löcher nicht zu weit voneinander und vom Sitzplatz des Wirtes entfernt sein. Zudem bevorzugen die Parasiten weitgehend dunkle Verstecke, sodass die Häufigkeit und Größe der Löcher so gewählt wird, dass nicht übermäßig viel Licht ins Innere des Hohlkörpers eindringt. Bevorzugt sind dabei Öffnungen mit einem Durchmesser von ca. 2 bis ca. 5 mm, vorzugsweise von ca. 3 bis ca. 5 mm, besonders bevorzugt von ca. 4 mm und in einem Abstand zueinander in Längsrichtung von ca. 1 bis ca. 20 cm, vorzugsweise von ca. 5 - ca. 10 cm. Die Form der Öffnungen wird dabei beliebig gewählt, sie kann rund, oval, rechteckig, dreieckig, länglich oder quadratisch sein. Dementsprechend werden die Öffnungen leicht, beispielsweise durch Bohrungen, in bereits vorhandene Sitzelemente eingefügt. Außerdem können bei der industriellen Fertigung von Hohlkörpern bereits vorhandenes Material oder Werkzeuge verwendet werden, wodurch der finanzielle Aufwand für Neuanschaffungen reduziert werden kann.

In einer bevorzugten Ausführungsform befinden sich die Öffnungen an der Oberseite der Wand des Hohlkörpers. Dadurch sind die Öffnungen verhältnismäßig nah am Wirt, das heißt in der Nähe des Vogels, der auf dem Hohlkörper sitzt, und die Distanz, welche die Parasiten zu ihren Verstecken zurücklegen müssen, ist vergleichsweise gering. Alternativ oder zusätzlich können sich auch mehrere Öffnungen an der Unterseite der Wand des Hohlkörpers befinden. Diese Öffnungen sind insbesondere geeignet, um die Kadaver der Parasiten beim Reinigen zu entfernen. Sie können durch die Öffnungen auf der Unterseite herausgekehrt oder herausgespült werden. Daher ist es vorteilhaft, wenn die Öffnungen auf der Unterseite der Wand des Hohlkörpers einen Durchmesser von ca. 5 bis ca. 10 mm, vorzugsweise von ca. 7 mm aufweisen. Die Anzahl und der Abstand der Löcher sind dabei so gewählt, dass das Innere des Hohlkörpers dennoch ausreichend dunkel ist um von den Parasiten als Versteck akzeptiert zu werden.

In einer bevorzugten Ausführungsform ist die elektromagnetische Strahlung Wärmestrahlung, Infrarotstrahlung, Ultraviolettstrahlung oder Mikrowellenstrahlung. Alle diese elektromagnetischen Strahlungen sind geeignet, um Parasiten im Inneren des Hohlkörpers zu töten. Wärmestrahlung entsteht, indem ein erhitzter Körper, beispielsweise eine Lampe, eine Halogenlampe, bevorzugt mit ca. 20 bis 100 Watt, ein Heizdraht, ein Heizleiter oder ein Glühdraht seine Wärme in Form thermischer Strahlung an die Umgebung abgibt. Die Intensität der Wärmestrahlung ist dabei vor allem vom Oberflächenmaterial des emittierenden Körpers abhängig. Durch Erhitzen eines Körpers im Inneren des Hohlkörpers werden dessen Inneres und dessen innere Oberfläche so stark erhitzt, dass die Parasiten, die sich darin befinden, abgetötet werden. Infrarotstrahlung mit einer Wellenlänge von 780 nm bis 1 mm zählt ebenfalls zur thermischen Strahlung. Sie kann mit Hilfe verschiedener Arten von Infrarotstrahlern, beispielsweise mit Heizstrahlern, Rotlichtlampen, oder keramischen Infrarotstrahlern erzeugt werden, wird aber auch von herkömmlichen Glühbirnen emittiert. Auch durch Infrarotstrahlung kann das Innere des Hohlkörpers ausreichend erhitzt werden, um die sich darin befindenden Parasiten zu töten. Mikrowellen mit einer Wellenlänge von 1 mm bis 1 m werden ebenfalls verwendet, um Gegenstände und Flüssigkeiten zu erhitzen. Dabei führen sie den Gegenständen jedoch keine Wärme von außen zu, sondern regen die Moleküle der Gegenstände, insbesondere Wassermoleküle zu Dipol- und Multipolschwingungen an. Durch die ständige Ausrichtung im elektromagnetischen Wechselfeld emittieren diese Moleküle Wärme und erhitzen somit das bestrahlte Objekt "von Innen", Auf diese Weise lassen sich Parasiten abtöten, indem sie selbst erhitzt werden. Mikrowellenstrahlung ist besonders vorteilhaft, weil sie weitgehend unschädlich für die in der Behausung lebenden Vögel ist. Für den Einsatz von Mikrowellen bietet sich außerdem die Verwendung eines metallischen Hohlkörpers an, welchen die Mikrowellen nicht durchdringen können. Im Gegensatz zu den genannten elektromagnetischen Strahlungen, tötet Ultraviolettstrahlung Parasiten nicht durch Erhitzen, sondern indem sie die chemischen Bindungen von Molekülen zerstört. Ultraviolettstrahlung mit Wellenlängen von 1 nm bis 380 nm, die mit Hilfe von Quecksilberdampflampen oder -röhren generiert wird, wird zum Beispiel dazu verwendet, Oberflächen und Flüssigkeiten zu desinfizieren. Hierzu ist insbesondere die sogenannte UV-C-Strahlung mit Wellenlängen von 100 bis 280 nm geeignet, da sie vor allem Proteine und Desoxyribonukleinsäuren (DNA) schädigt. Die Vögel werden der Ultraviolettstrahlung nicht ausgesetzt, da diese kaum aus dem Hohlkörper austreten kann.

Die Verwendung elektromagnetischer Strahlung zur Abtötung von Parasiten innerhalb des erfindungsgemäßen Hohlkörpers belastet daher weder die in der Behausung lebenden Vögel noch Menschen oder Tiere in ihrer Umgebung.

Dementsprechend weist das Mittel zum Abtöten der Parasiten, in einer bevorzugten Ausführungsform, einen elektrischen Leiter oder eine elektromagnetische Strahlungsquelle, vorzugsweise eine Halogenlampe, eine Infrarotlampe, eine UV-Lampe oder einen Mikrowellensender auf. Diese Mittel sind alle geeignet eine oder mehrere der oben beschriebenen Strahlungen zu emittieren und so die Parasiten innerhalb des Hohlkörpers abzutöten. Um eine möglichst einfache Installation und Bedienung des Mittels zu erreichen, wird es vorzugsweise mit Netzspannung betrieben.

In einer bevorzugten Ausführungsform weist der elektrische Leiter einen metallischen elektrischen Leiter, vorzugsweise mindestens einen Heizleiter auf. Bei Heizleitern handelt es sich um Vorrichtungen, die geeignet sind Strom zu leiten und dabei Wärme an ihre Umgebung abzugeben. Der elektrische Leiter wird aktiviert, indem er an eine Stromquelle angeschlossen wird, er erhitzt sich und gibt seine Wärme an die Umgebung ab, sodass das Innere und die innere Oberfläche des Hohlkörpers erhitzt werden. Als elektrische Leiter sind beispielsweise Heizleiter, Heizleiterdrähte, Heizleiterwendeln, Heizleiterbänder und Heizleiterschienen geeignet. Die von dem metallischen elektrischen Leiter abgegebene Wärme ist direkt abhängig vom spezifischen Widerstand des elektrischen Leiters. Dieser beträgt vorzugsweise ca. 0,01 bis ca. 1,5 Ωmm²/m, wobei der elektrische Widerstand des Leiters sowohl durch die Länge als auch durch das Material des Leiters bestimmt wird. Das Material des Leiters sollte deshalb so gewählt werden, dass es bei Erhitzen des Leiters nicht schmilzt und trotz wiederholten Erhitzens und Abkühlens des Leiters korrosionsbeständig bleibt. In einer weiter bevorzugten Ausführungsform besteht der elektrische Leiter daher aus Aluminium, Kupfer oder Legierungen beispielsweise Kupfer-Nickel-Legierungen, Chrom-Nickel-Legierungen, Kupfer-Zinn-Legierungen, Messing oder aus ferritischen Chromstählen, die Aluminium enthalten können. Kupfer-Nickel-Legierungen weisen, je nach Nickelanteil einen spezifischen Widerstand von 0,025 bis 0,49 Ωmm²/m auf. Kupfer-Zinn-Legierungen, mit einem spezifischen Widerstand von ca. 0,13 Ωmm²/m, sind durch ihre hohe Korrosionsbeständigkeit besonders geeignet zur Verwendung als metallischer elektrischer Leiter. Messing ist auf Grund seines vorteilhaften Korrosionsverhaltens und seiner niedrigen Leitfähigkeit gut als Wärmeleiter geeignet.

In einer bevorzugten Ausführungsform umfasst das Mittel zum Abtöten der Parasiten einen metallischen elektrischen Leiter, der um ihn zu aktivieren an einem Ende an eine Spannungsquelle angeschlossen ist. Das gegenüberliegende Ende des elektrischen Leiters kann mit dem Hohlkörper verbunden werden, sofern der Hohlkörper aus Metall gebildet ist. In dieser Ausführungsform wird der Hohlkörper als Rückleiter für den metallischen elektrischen Leiter verwendet. Dieses System kann leicht in bestehende Behausungen eingebaut werden, in denen beispielsweise bereits massive Sitzelemente vorhanden sind. Dazu wird ein metallisches Rohr als Hohlkörper verwendet und unterhalb der bereits bestehenden Sitzstangen installiert. Auf diese Wiese kommen die Vögel nicht mit dem Hohlkörper in Berührung, sodass Verletzungen durch Stromunfälle vermieden werden. Zudem wird durch die Verwendung des Hohlkörpers als Rückleiter der notwendige Materialverbrauch für den hochwertigen elektrischen Leiter reduziert.

In einer alternativen Ausführungsform hierzu kann ein zweiter metallischer elektrischer Leiter innerhalb des Hohlkörpers als Rückleiter dienen. Durch das vollständig innenliegende Leitersystem besteht keine Gefahr, dass die Vögel mit dem elektrischen Leiter in Berührung kommen. Zudem kann der vollständig innenliegende Leiter in jede Sitzstange integriert werden, unabhängig aus welchem Material diese gebildet ist. Zur Stabilisierung des elektrischen Leiters im Inneren des Hohlkörpers und um sicherzustellen, dass kein Kontakt zwischen dem elektrischen Leiter und dem Hohlkörper entsteht, umfasst das Mittel zum Abtöten der Parasiten vorzugsweise einen oder mehrere Isolatoren. Hierzu geeignet sind insbesondere Stützisolatoren, vorzugsweise Isolierscheiben, und thermoplastische Isolatoren, vorzugsweise sternförmige thermoplastischen Isolatoren. Isolierscheiben sind einfach und kostengünstig und daher besonders geeignet um den erfindungsgemäßen Hohlkörper schnell und preiswert herzustellen, beispielsweise um ihn in bereits bestehende Behausungen zu integrieren. Sternförmige Isolatoren eignen sich hingegen vor allem zur industriellen Fertigung besonders langer Sitzstangen, wie sie für Mastbetriebe benötigt werden.

In einer bevorzugten Ausführungsform weist die innere Oberfläche des Hohlkörpers durch Aktivieren des Mittels eine Temperatur, die zum Abtöten der Parasiten geeignet ist, vorzugsweise eine Temperatur von ca. 50 bis ca. 100°C auf. Bei diesen Temperaturen werden sowohl adulte Parasiten als auch Eier und Entwicklungsstadien der Parasiten abgetötet. In einer besonders bevorzugten Ausführungsform weist die innere Oberfläche des Hohlkörpers diese Temperatur durch Aktivieren des Mittels für ca. 10 bis 15 Sekunden auf. Eine derart schnelle Erhitzung des Hohlkörpers auf ca. 50 bis ca. 100°C ist geeignet die Parasiten zu töten, bevor diese aus dem Hohlkörper flüchten können. Zudem wird durch die kurze Erhitzungszeit verhindert, dass die äußere Oberfläche des Hohlkörpers, mit welcher die Vögel gegebenenfalls in Berührung kommen, heiß wird. Dadurch kann eine Störung der Vögel verhindert werden.

In einer bevorzugten Ausführungsform weist das Mittel zum Abtöten von Parasiten eine Temperaturhochabschaltung auf. Diese dient dazu, das Mittel automatisch abzuschalten, sobald die gewünschte Temperatur, vorzugsweise eine Temperatur zwischen ca. 50 und ca. 100 °C, erreicht ist. Das erlaubt eine einfache und vollautomatische Bedienung des Mittels und stellt sicher, dass der Hohlkörper nicht überhitzt wird. Durch die automatische Abschaltung des Mittels wird außerdem ein übermäßiger Energieverbrauch unterbunden. Die Temperaturhochabschaltung kann zur Ermittlung der Temperatur innerhalb des Hohlkörpers, beispielsweise einen Temperaturfühler umfassen. Umfasst das Mittel zum Abtöten der Parasiten einen elektrischen Leiter, kann dessen Temperatur über die Änderung seines Widerstands, die sich mit zunehmender Temperatur ändert, kontrolliert werden.

In einer bevorzugten Ausführungsform ist die Strahlungsquelle kürzer als der Hohlkörper. Dadurch kann die Strahlungsquelle durch den Hohlkörper bewegt werden und so die Parasiten, die sich in dem Hohlkörper befinden, abgetötet werden. Die Strahlungsquelle ist dabei vorzugsweise an einem Schlitten angeordnet, der eine Zugvorrichtung umfasst, mit der der Schlitten in dem Hohlkörper bewegt werden kann. Die Zugvorrichtung kann beispielsweise ein Seil, eine Kette, eine Schubkette und/oder eine flexible elektrische Leitung, die zur Stromversorgung der Strahlungsquelle dient, umfassen. Dabei weist die Zugvorrichtung vorzugsweise eine Klemme zur mechanischen Entlastung auf. Mit Hilfe der Zugvorrichtung wird die Strahlungsquelle durch den Hohlkörper gezogen und so die Parasiten entlang des gesamten Hohlkörpers abgetötet. Um eine kontinuierliche Bewegung und leichte Bedienung der Zugvorrichtung zu gewährleisten, weist diese vorzugsweise mindestens eine Trommel auf. In einer besonders bevorzugten Ausführungsform umfasst die Zugvorrichtung außerdem einen Elektromotor zur Bewegung der Trommel. Dadurch ist die Zugvorrichtung mit der elektromagnetischen Strahlungsquelle voll automatisierbar und kann mit konstanter und festlegbarer Zuggeschwindigkeit durch den Körper bewegt werden. Außerdem ist es möglich, durch eine Zeitschaltuhr oder gegebenenfalls mittels eines Computers die Vorrichtung zu betreiben, ohne dass eine manuelle Bedienung nötig wäre.

In einer bevorzugten Ausführungsform weist der Schlitten ein Glasrohr auf, in dem die elektromagnetische Strahlungsquelle angeordnet ist. Dieses Glasrohr ist vorzugsweise aus einem Material mit hoher Festigkeit und Strahlendurchlässigkeit, wie beispielsweise Quarzglas, welches besonders widerstandsfähig ist, ausgebildet. Durch das Glasrohr ist die Strahlungsquelle geschützt und gleichzeitig einfach zu reinigen.

In einer bevorzugten Ausführungsform weist der Schlitten mindestens eine Gleithilfe, vorzugsweise eine Gleitkufe und/oder einen Nocken auf. Dadurch kann der Schlitten sicher und in konstantem Abstand zur Innenwand durch den Hohlkörper bewegt werden. Um den Schlitten im Inneren des Hohlkörpers zu zentrieren und gegebenenfalls Unebenheiten des Hohlkörpers auszugleichen, kann die Gleithilfe des Schlittens gefedert sein oder eine Rolle oder ein Kugellager umfassen, wobei die Rolle oder das Kugellager vorzugsweise am Ende des Schlittens angeordnet sind.

In einer bevorzugten Ausführungsform weist das Mittel zum Abtöten von Parasiten ferner eine Reinigungsvorrichtung auf. Diese kann beispielsweise eine Bürste, einen Schwamm, einen Tuchpfropfen und/oder einen Schaumstoffpfropfen umfassen. Indem die Reinigungsvorrichtung an der Zugvorrichtung angeordnet ist, wird sie zusammen mit der Strahlungsquelle durch den Hohlkörper bewegt. So können die Kadaver der abgetöteten Parasiten unmittelbar nachdem sie abgetötet wurden aus dem Hohlkörper entfernt werden. Dies trägt zusätzlich zur Hygiene der Vogelbehausung bei und vermeidet ein übermäßiges Verunreinigen der Zugvorrichtung. Alternativ kann die Reinigungsvorrichtung auf einer Zugvorrichtung angeordnet sein, die die Reinigungsvorrichtung entlang eines elektrischen Leiters durch den Hohlkörper bewegt.

In einem weiteren Aspekt betrifft die Erfindung ein Verfahren zur Bekämpfung von Parasiten in einer Behausung für Vögel mittels eines Hohlkörpers wie er oben beschrieben ist. Indem die Parasiten im Inneren des Hohlkörpers, in dem sie sich sammeln, abgetötet werden, werden die Vögel durch die Bekämpfung der Parasiten nicht gestört. Der Hohlkörper kann von außerhalb der Behausung bedient oder automatisch gesteuert werden. Dadurch muss die Behausung der Vögel nicht betreten werden, und die Vögel müssen zum Abtöten der Parasiten nicht aus der Behausung entfernt werden. Außerdem verbleibt der Hohlkörper während des Abtötens der Parasiten in der Behausung. Er muss auch nach dem Abtöten der Parasiten nicht aus der Behausung entfernt werden. Zudem kann das erfindungsgemäße Verfahren durchgeführt werden, ohne dass die Verwendung von Insektiziden notwendig wäre, wodurch die chemische Belastung für Mensch und Tier erheblich reduziert wird.

In einer bevorzugten Ausführungsform werden die Parasiten im Inneren des Hohlkörpers in Intervallen von ca. 2 bis ca. 4 Wochen abgetötet. Dadurch ist es möglich, die Parasiten kontinuierlich zu bekämpfen, ohne dass die Vögel durch die Behandlung oder durch das Reinigen der Behausung gestört werden.

In einer bevorzugten Ausführungsform wird die innere Oberfläche des Hohlkörpers durch Aktivieren des Mittels auf eine Temperatur, die zum Abtöten der Parasiten geeignet ist, vorzugsweise auf eine Temperatur von ca. 50 bis ca. 100°C erwärmt. Diese Temperatur ist geeignet, um sowohl adulte Parasiten als auch ihre Eier und Entwicklungsstadien abzutöten. In einer besonders bevorzugten Ausführungsform wird die innere Oberfläche des Hohlkörpers innerhalb von ca. 10 bis ca. 15 Sekunden auf eine Temperatur, die zum Abtöten der Parasiten geeignet ist, erwärmt. Durch das rasche Erwärmen werden die Parasiten getötet noch bevor sie aus dem Hohlkörper fliehen können oder die Oberfläche des Hohlkörpers, mit der die Vögel gegebenenfalls in Berührung kommen, heiß wird.

In einer bevorzugten Ausführungsform wird die innere Oberfläche des Hohlkörpers erhitzt, indem eine Strahlungsquelle durch den Hohlkörper hindurch bewegt wird, wobei die innere Oberfläche des Hohlkörpers auf eine Temperatur, die zum Abtöten der Parasiten geeignet ist, erwärmt wird. Die Temperatur, der die Parasiten ausgesetzt sind, kann durch Regulieren der Geschwindigkeit, mit der die Strahlungsquelle durch den Hohlkörper hindurch bewegt wird, geregelt werden. Bei sehr starkem Befall kann die Strahlungsquelle entsprechend langsam bewegt werden, um eine höhere Temperatur zu erreichen. Außerdem kann die Temperatur auch über die Stärke der elektromagnetischen Strahlung und über die Art der elektromagnetischen Strahlung beeinflusst werden.

Die Erfindung betrifft ferner die Verwendung einer Sitzstange für Vögel zur Bekämpfung von Parasiten mit mindestens einer Öffnung in der Wand der Sitzstange, zur Aufnahme der Parasiten ins Innere der Sitzstange, und einem im Inneren lösbar angeordneten Mittel zum Abtöten der Parasiten. Dadurch dass das Mittel vorbestimmt aktivierbar ist und eine elektromagnetische Strahlung emittiert, werden die Parasiten im Inneren der Sitzstange getötet, ohne dass diese zum Abtöten oder anschließend aus den Stallungen entfernt werden muss. Dadurch bleiben die Vögel in ihrem Tagesablauf ungestört. Außerdem werden weder die Tiere noch die Menschen in ihrer Umgebung durch den Einsatz von Insektiziden oder Silikatstaub gefährdet. Sitzstangen sind zur Bekämpfung von Parasiten besonders geeignet, da sie die unmittelbare Umgebung des Vogels bilden. Im Gegensatz zu herkömmlichen Sitzstangen, die keine Rückzugsmöglichkeiten für Parasiten bieten, weist die zur Bekämpfung von Parasiten verwendete Sitzstange Öffnungen in ihrer Wand auf, sodass die Parasiten ins Innere der Sitzstange kriechen können, wo sie abgetötet werden. Herkömmliche, beispielsweise bereits installierte Sitzstangen können durch das nachträgliche Einfügen von Bohrungen und eines Mittels, das eine elektromagnetische Strahlung emittiert, zur Bekämpfung von Parasiten verwendet werden.

In einer bevorzugten Ausführungsform ist die elektromagnetische Strahlung, die von dem Mittel, das sich in der zur Bekämpfung von Parasiten verwendeten Sitzstange befindet, emittierte wird, Wärmestrahlung, Infrarotstrahlung, Ultraviolettstrahlung oder Mikrowellenstrahlung. Diese elektromagnetischen Strahlungen sind besonders geeignet um Parasiten innerhalb der Sitzstange abzutöten.

### Beispiele

### 1. Parasitenfalle zur Installation in einem Geflügelstall

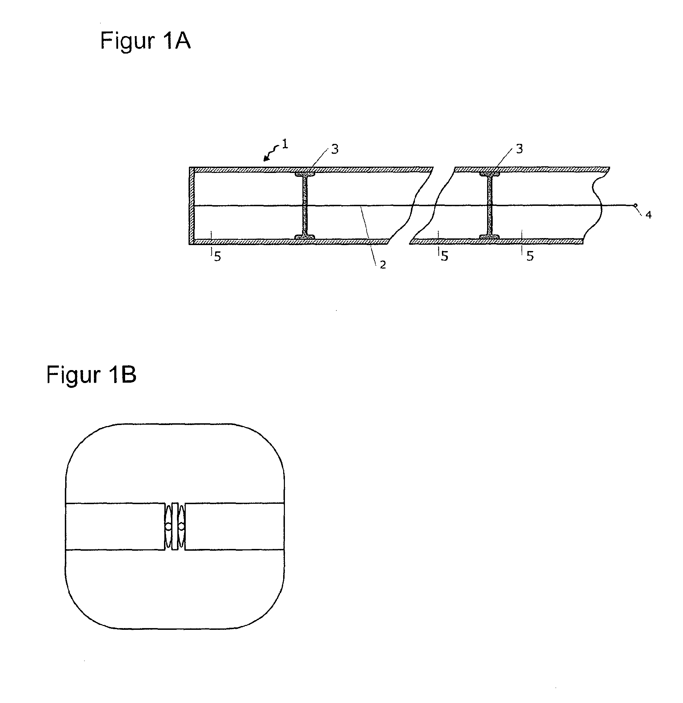

Figur 1A zeigt einen röhrenförmigen Hohlkörper 1 im Querschnitt, in dessen Innerem ein elektrischer Leiter 2 angeordnet ist. Der Hohlkörper 1, mit einem Durchmesser von 4 cm, ist aus Metall ausgebildet. An der Unterseite des Hohlkörpers 1 befinden sich, in einem Abstand von 5 cm Bohrungen 5 mit einem Durchmesser von 8 mm. Der elektrische Leiter 2 im Inneren des Hohlkörpers 1 besteht aus Kupfer und ist an seiner einen Seite über einen Leiteranschluss 4 an eine Spannungsquelle (nicht gezeigt) mit einer Netzspannung von 230 Volt angeschlossen. An seinem anderen Ende ist der elektrische Leiter 2 mit dem Hohlkörper 1 aus Metall verbunden, der als Rückleiter dient. Symmetrische Isolierscheiben 3 fixieren den elektrische Leiter 2 in ausreichendem Abstand von der Innenwand des Hohlkörpers 1. Figur 1B zeigt die Isolierscheibe 3, die sowohl der elektrischen Isolation als auch zum Zentrieren des elektrischen Leiter 2 im Inneren des Hohlkörpers 1 dient. In dem Hohlkörper 1 ist zusätzlich eine Temperaturhochabschaltung (nicht gezeigt) angeordnet, welche die Stärke des, durch den elektrischen Leiter 2 fließenden Stroms, misst. Der elektrische Widerstand des elektrischen Leiters 2 steigt mit seiner Temperatur. Bei einer konstanten Spannung stinkt die Stromstärke mit steigender Temperatur des elektrischen Leiters 2 und liefert damit ein zuverlässiges Maß für die erreichte Temperatur. Die Temperaturhochabschaltung ermittelt unmittelbar nach dem Einschalten des Stroms einen Anfangsstromwert und schaltet die Stromzufuhr automatisch ab, sobald ein festgelegter Endstromwert unterschritten wird, der einer Temperatur im Inneren des Hohlkörpers 1 von ca. 75°C entspricht.

Diese Vorrichtung wird in einem Geflügelstall unterhalb der Sitzelemente der Vögel installiert. Parasiten wie die Rote Vogelmilbe ziehen sich, nachdem sie einen Vogel befallen und Blut gesaugt haben, durch die Bohrungen 5 an der Unterseite ins Innere des Hohlkörpers 1 zurück. Darin legen sie auch ihre Eier ab, aus denen sich die Larven- und Nymphenstadien entwickeln. In Abständen von 2 - 4 Wochen wird der elektrische Leiter 2 aktiviert, indem Strom durch ihn geleitet wird, so dass sich das Innere und die innere Oberfläche des Hohlkörpers 1 auf ca. 75°C erhitzen. Durch die starke Erwärmung sterben die Parasiten, die sich auf der Oberfläche des Hohlkörpers 1 befinden. Sobald eine Temperatur von ca. 75°C erreicht ist, wird die Stromzufuhr durch die Temperaturhochabschaltung unterbrochen und der elektrische Leiter 2 abgeschalten. Bei starkem Befall wird der elektrische Leiter 2 öfter, etwa einmal pro Woche aktiviert. Zur Reinigung des Hohlkörpers 1 wird der elektrische Leiter 2 ca. einmal im Jahr aus dem Hohlkörper 1 entfernt und gereinigt.

Die beschriebene Parasitenfalle ist einfach und preiswert herzustellen und kann in jeden Geflügelstall, gegebenenfalls nachträglich integriert werden. Sie bietet sich vor allem zur Nachrüstung mittlerer und kleinerer Geflügelställe an, da sie vor Ort und den Gegebenheiten des Stalls entsprechend angefertigt werden kann.

### 2. Sitzstange zur Integration in einen Vogelkäfig

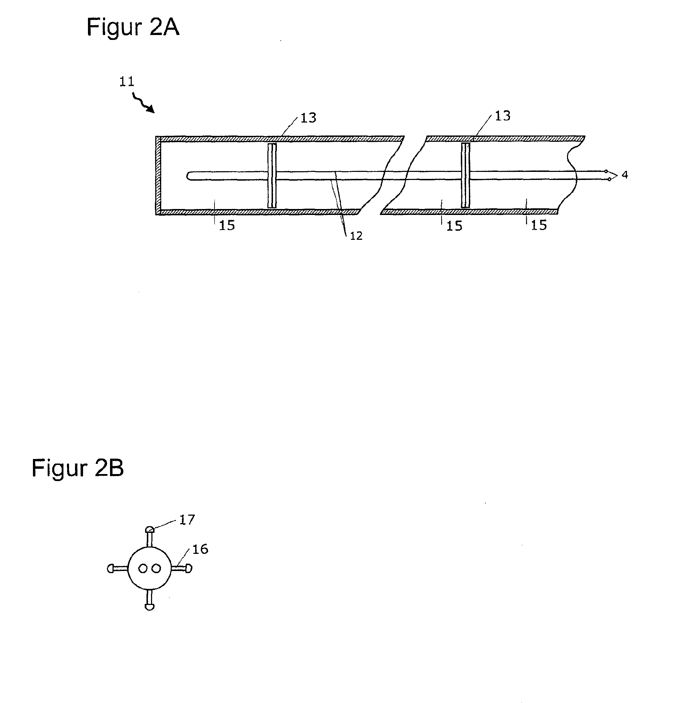

Figur 2A zeigt eine röhrenförmige Sitzstange 11 im Querschnitt, in der zwei Heizleiter 12 angeordnet sind. Die Sitzstange 11 ist aus Kunststoff gefertigt und dient dazu, Parasiten in einem Vogelkäfig für Ziervögel zu bekämpfen. Sie ist 25 cm lang und weist einen Durchmesser von 2 cm auf. Auf ihrer Oberfläche befinden sich mehrere, im Abstand von ca. 1 cm angebrachten Öffnungen 15 mit einem Durchschnitt von 2 mm. Als Heizleiter 12 dienen zwei Kupfer-Nickel-Drähte, die an ihrem einen Ende an die Pole einer Spannungsquelle (nicht gezeigt) angeschlossen und am entgegen gesetzten Ende miteinander verbunden sind. Als Spannungsquelle ist eine herkömmliche Batterie vorgesehen, die über eine automatische Steuerung (nicht gezeigt) an- und abgeschalten wird. Die thermoplastische Isolatoren 13 fixieren die Heizleiter 12 in ausreichendem Abstand von einander und von der inneren Oberfläche der Sitzstange 11. Figur 2B zeigt einen sternförmigen thermoplastischen Isolator 13 mit vier Isolatorfingern 16, an deren äußerem Ende sich jeweils eine Kufe 17 befindet.

Die beschriebene Sitzstange 11 wird in einem Vogelkäfig installiert, so dass die Parasiten, sobald sie den Vogel verlassen, ins Innere der Sitzstange 11 gelangen. Durch Aktivieren des Heizleiters 12 wird die innere Oberfläche der Sitzstange 11 auf 50 - 75 °C erhitzt und die sich darin befindenden Parasiten abgetötet.

Diese Sitzstange 11 kann industriell gefertigt und in jeden beliebigen Vogelkäfig, gegebenenfalls nachträglich, integriert werden.

### 3. Sitzstange zur Installation in einem Hühnerstall

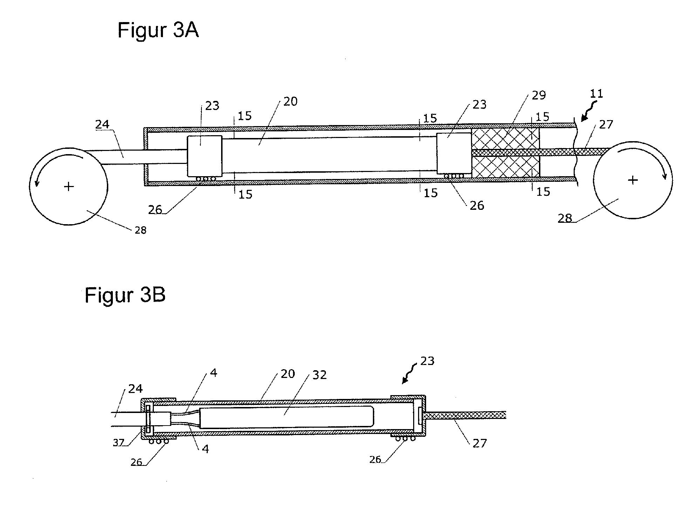

Figur 3A zeigt eine Sitzstange 11 für Hühner aus Metall, die als Parasitenfalle ausgestaltet ist. Die Sitzstange 11 weist einen Durchmesser von 4 cm und eine Länge von 10 - 15 m auf. An der Oberseite sind, in einem Abstand von 5 cm, mehrere Öffnungen 15 mit einem Durchmesser von 5 mm angeordnet. An der Unterseite der Sitzstange 11 sind, in einem Abstand zueinander von 20 cm, mehrere Öffnungen 15 mit einem Durchmesser von 7 mm angeordnet. Im Inneren der Sitzstange 11 befindet sich ein Schlitten 23, an dem ein Glasrohr 20 montiert ist. Figur 3B zeigt das Glasrohr 20 mit Schlitten 23 im Detail. Im Inneren des Glasrohrs 20 ist ein Mikrowellensender 32 angeordnet, der über elektrischen Leiteranschlüsse 4 mit einem flexiblen elektrischen Anschlusskabel 24 verbunden ist. Das elektrische Anschlusskabel 24 ist zur Zugentlastung mit einer Klemme 37 an den Schlitten 23 montiert. Der Schlitten 23 wird auf Rollen 26 durch die Sitzstange 11 bewegt. Hierzu sind ein Zugseil 27 und das elektrische Anschlusskabel 24 auf jeweils einer Seite des Schlittens 23 befestigt. Beide werden über Trommeln 28 geführt, so dass der Schlitten 23 durch Betätigen der Trommeln 28 durch die Sitzstange 11 bewegt wird. An dem Schlitten 23 ist auch ein Tuchpfropfen 29 angebracht, der gleichzeitig mit dem Schlitten 23 durch die Sitzstange 11 bewegt wird und dabei die Innenseite der Sitzstange 11 reinigt.

Diese Vorrichtung kann industriell hergestellt werden und ist insbesondere geeignet, um die Rote Vogelmilbe in großen Hühnerställen, wie sie in Mastbetrieben vorkommen, effektiv und mit geringem Personalaufwand zu bekämpfen. Dadurch, dass die Kadaver der getöteten Milben mit Hilfe des Tuchpfropfens 29 durch die Öffnungen 15 an der Unterseite der Sitzstange 11 gekehrt werden, ist keine zusätzliche und zeitaufwändige Reinigung der Sitzstange 11 notwendig.

### 4. Sitzstange zur Integration in ein Vogelgehege

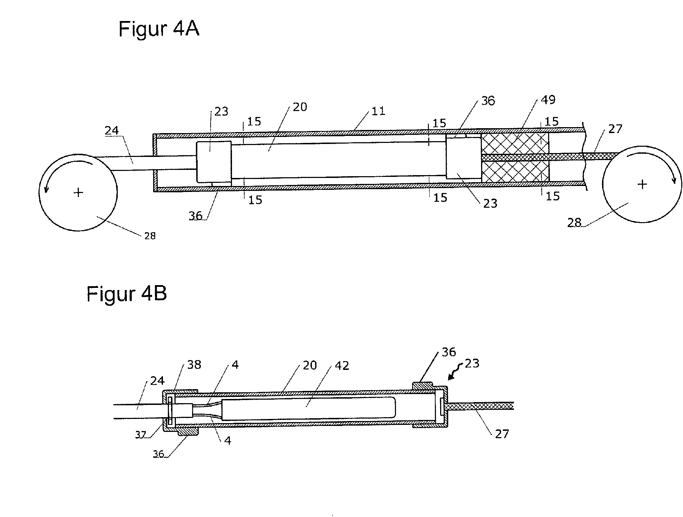

Figur 4A zeigt eine Sitzstange 11 aus Kunststoff, die von Vögeln als Anflug- oder Ruheplatz verwendet wird und dazu ausgestaltet ist, Vogelparasiten in einem zoologischen Vogelgehege zu bekämpfen. Die Sitzstange 11 weist einen Durchmesser von ca. 8 cm und eine Länge von 2 m auf. An der Ober- und Unterseite der Sitzstange 11 befinden sich im Abstand von 20 cm Öffnungen 15, die einen Durchmesser von etwa 6 mm aufweisen. Im Inneren der Sitzstange 11 ist ein, auf einem Schlitten 23 angeordnetes Glasrohr 20 aus Quarzglas montiert. Figur 4B zeigt den Schlitten 23 mit dem Glasrohr 20, in dem sich eine Infrarotlampe 42 befindet. Der Schlitten 23 mit der Infrarotlampe 42 weist eine Länge von 25 cm auf und wird mittels einer Zugvorrichtung aus einem Zugseil 27 und zwei Trommeln 28 bewegt. Festsitzende Verschlusskappen 38 an den Enden des Glasrohres 20 verbinden das Glasrohr 20 mit dem Zugseil 27 und dem elektrische Anschlusskabel 24. Um den Umfang des Schlittens 23 verteilte Gleitkufen 36 gewährleisten einen ausreichenden Abstand des Glasrohrs 20 mit der Infrarotlampe 42 zur inneren Oberfläche der Sitzstange 11 und vermindern Reibungskräfte während der Schlitten 23 durch die Sitzstange 11 bewegt wird. Durch eine zusätzliche Federung (nicht gezeigt) der Gleitkufen 36 wird der Schlitten 23 in radialer Richtung innerhalb der Sitzstange 11 zentriert und Unebenheiten der inneren Oberfläche ausgeglichen. An den Schlitten 23 ist außerdem eine Bürste 49 zur Reinigung der Sitzstange 11 montiert.

Wenn sich Vögel auf der Sitzstange 11 niederlassen, kriechen die Parasiten durch die Öffnungen 15 ins Innere der Sitzstange 11. Dort werden sie abgetötet, indem der Schlitten 23 mit der aktivierten Infrarotlampe 42 durch die Sitzstange 11 bewegt wird. Dabei wird die innere Oberfläche der Sitzstange 11 auf 75 - 100 °C erwärmt, sodass sowohl adulte Parasiten als auch deren Eier und Larven abgetötet werden. Gleichzeitig mit dem Schlitten 23 wird auch die Bürste 49 durch die Sitzstange 11 bewegt, sodass die abgetöteten Parasiten unmittelbar durch die Öffnungen 15, die sich auf der Unterseite die Sitzstange 11 befinden, herausgekehrt werden.

Durch die Verwendung herkömmlicher und preiswerter Materialien wie Kunststoffrohre und Infrarotlampen ist die Vorrichtung einfach und günstig herzustellen und kann in zoologischen Gärten, entsprechend den dort vorhandenen Gehegen, angefertigt werden.

### Referenzen:

Chirico J, Tauson R., Traps containing acaricides for the control of Dermanyssus gallinae, Vet Parasitol. 2002 Dec 11;110(1-2):109-16.

DE 10 2005 031 976 A1
DE 10 2008 006 683 A1
DE 198 08 745 A1

### Bezugszeichenliste

- 1: Hohlkörper
- 2: Elektrischer Leiter
- 3: Isolierscheibe
- 4: Leiteranschluss
- 5: Bohrung

- 11: Sitzstange
- 12: Heizleiter
- 13: Thermoplastischer Isolator
- 15: Öffnung
- 16: Isolatorfinger
- 17: Kufe

- 20: Glasrohr
- 23: Schlitten
- 24: Elektrisches Anschlusskabel
- 26: Rolle
- 27: Zugseil
- 28: Trommel
- 29: Tuchpfropfen

- 32: Mikrowellensender
- 36: Gleitkufe
- 37: Klemme
- 38: Verschlusskappe

- 42: Infrarotlampe
- 49: Bürste

## Patentansprüche

1. Länglicher Hohlkörper (1) zur Bekämpfung von Parasiten in einer Behausung für Vögel, mit mindestens einer Öffnung (15) in der Wand des Hohlkörpers (1), zur Aufnahme der Parasiten ins Innere des Hohlkörpers (1), und einem im Inneren lösbar angeordneten Mittel zum Abtöten der Parasiten, wobei das Mittel vorbestimmt aktivierbar ist und eine elektromagnetische Strahlung emittiert, und der Hohlkörper (1) ein Sitzelement ist und während des Abtötens der Parasiten in der Behausung verbleibt.

2. Hohlkörper (1) gemäß Anspruch 1, **dadurch gekennzeichnet, dass** der Hohlkörper (1) eine Sitz- oder Anflugstange, für Vögel, vorzugsweise eine Sitzstange (11) an einem Ruheplatz innerhalb der Behausung ist.

3. Hohlkörper (1) gemäß Anspruch 1 oder 2, **dadurch gekennzeichnet, dass** der Hohlkörper (1) einen Durchmesser von ca. 0,5 bis ca. 10 cm, vorzugsweise von ca. 2 bis ca. 8 cm, weiter bevorzugt von ca. 3 bis ca. 6 cm aufweist.

4. Hohlkörper (1) gemäß einem der vorhergehenden Ansprüche, **dadurch gekennzeichnet, dass** der Hohlkörper (1) mehrere Öffnungen (15) in der Wand aufweist, vorzugsweise in einem Abstand zueinander in Längsrichtung von ca. 1 bis ca. 20 cm und weiter bevorzugt mit einem Durchmesser, der das 0,2 bis 0,3 Fache des Durchmessers des Hohlkörpers (1) beträgt.

5. Hohlkörper (1) gemäß einem der vorhergehenden Ansprüche, **dadurch gekennzeichnet, dass** die elektromagnetische Strahlung Wärmestrahlung, Infrarotstrahlung, Ultraviolettstrahlung oder Mikrowellenstrahlung ist.

6. Hohlkörper (1) gemäß einem der vorhergehenden Ansprüche, **dadurch gekennzeichnet, dass** das Mittel einen elektrischen Leiter (2) oder eine elektromagnetische Strahlungsquelle, vorzugsweise eine Halogenlampe, eine Infrarotlampe (42), eine UV-Lampe oder einen Mikrowellensender (32) aufweist.

7. Hohlkörper (1) gemäß Anspruch 6, **dadurch gekennzeichnet, dass** der elektrische Leiter (2) einen metallischen elektrischen Leiter (2), vorzugsweise mindestens einen Heizleiter (12) aufweist.

8. Hohlkörper (1) gemäß Anspruch 6, **dadurch gekennzeichnet, dass** das Mittel einen Schlitten (23), an dem die elektromagnetische Strahlungsquelle angeordnet ist, und eine Zugvorrichtung, mit der der Schlitten (23) in dem Hohlkörper (1) bewegt werden kann, umfasst.

9. Hohlkörper (1) gemäß einem der vorhergehenden Ansprüche, **dadurch gekennzeichnet, dass** die innere Oberfläche des Hohlkörpers (1) durch Aktivieren des Mittels eine Temperatur, die zum Abtöten der Parasiten geeignet ist, vorzugsweise eine Temperatur von ca. 50 bis ca. 100 °C, aufweist.

10. Hohlkörper (1) gemäß einem der vorhergehenden Ansprüche, **dadurch gekennzeichnet, dass** das Mittel ferner eine Reinigungsvorrichtung aufweist.

11. Verfahren zur Bekämpfung von Parasiten in einer Behausung für Vögel mittels eines Hohlkörpers (1) nach einem der vorhergehenden Ansprüche, **dadurch gekennzeichnet, dass** die Parasiten im Inneren des Hohlkörpers (1), in dem sie sich sammeln, abgetötet werden.

12. Verfahren nach Anspruch 9, **dadurch gekennzeichnet, dass** die innere Oberfläche des Hohlkörpers (1) durch Aktivieren des Mittels auf eine Temperatur, die zum Abtöten der Parasiten geeignet ist, vorzugsweise auf eine Temperatur von ca. 50 bis ca. 100 °C, erwärmt wird.

13. Verfahren nach Anspruch 9 oder 10, **dadurch gekennzeichnet, dass** die innere Oberfläche des Hohlkörpers (1) durch Aktivieren des Mittels für ca. 10 bis ca. 15 sec eine Temperatur, die zum Abtöten der Parasiten geeignet ist, vorzugsweise eine Temperatur von ca. 50 bis ca. 100 °C, aufweist.

14. Verwendung einer Sitzstange (11) für Vögel zur Bekämpfung von Parasiten mit mindestens einer Öffnung (15) in der Wand der Sitzstange (11), zur Aufnahme der Parasiten ins Innere der Sitzstange (11), und einem im Inneren lösbar angeordneten Mittel zum Abtöten der Parasiten, **dadurch gekennzeichnet, dass** das Mittel vorbestimmt aktivierbar ist und eine elektromagnetische Strahlung emittiert.

15. Verwendung nach Anspruch 14, **dadurch gekennzeichnet, dass** die von dem Mittel zum Abtöten der Parasiten emittierte elektromagnetische Strahlung, Wärmestrahlung, Infrarotstrahlung, Ultraviolettstrahlung oder Mikrowellenstrahlung ist.

## Claims

1. Elongate hollow member (1) for combating parasites in a housing for birds, having in the wall of the hollow member (1) at least one opening (15) for receiving the parasites inside the hollow member (1) and a means which is releasably arranged at the inner side for killing the parasites, wherein the means is able to be activated in a predetermined manner and emits an electromagnetic radiation, and the hollow member (1) is a seating element and remains in the housing whilst the parasites are killed.

2. Hollow member (1) according to claim 1, **characterised in that** the hollow member (1) is a perch or landing rod for birds, preferably a perch (11) at a resting place inside the housing.

3. Hollow member (1) according to claim 1 or claim 2, **characterised in that** the hollow member (1) has a diameter of from approximately 0.5 to approximately 10 cm, preferably from approximately 2 to approximately 8 cm, more preferred from approximately 3 to approximately 6 cm.

4. Hollow member (1) according to any one of the preceding claims, **characterised in that** the hollow member (1) has a plurality of openings (15) in the wall, preferably with a spacing with respect to each other in the longitudinal direction of from approximately 1 to approximately 20 cm and more preferred having a diameter which is from 0.2 to 0.3 times the diameter of the hollow member (1).

5. Hollow member (1) according to any one of the preceding claims, **characterised in that** the electromagnetic radiation is heat radiation, infrared radiation, ultraviolet radiation or microwave radiation.

6. Hollow member (1) according to any one of the preceding claims, **characterised in that** the means has an electrical conductor (2) or an electromagnetic radiation source, preferably a halogen lamp, an infrared lamp (42), a UV lamp or a microwave transmitter (32).

7. Hollow member (1) according to claim 6, **characterised in that** the electrical conductor (2) has a metal electrical conductor (2), preferably at least one heating conductor (12).

8. Hollow member (1) according to claim 6, **characterised in that** the means comprises a carriage (23) on which the electromagnetic radiation source is arranged, and a pulling device, by means of which the carriage (23) can be moved in the hollow member (1).

9. Hollow member (1) according to any one of the preceding claims, **characterised in that** the inner surface of the hollow member (1), by activating the means, has a temperature which is suitable for killing the parasites, preferably a temperature of from approximately 50 to approximately 100°C.

10. Hollow member (1) according to any one of the preceding claims, **characterised in that** the means further has a cleaning device.

11. Method for combating parasites in a housing for birds by means of a hollow member (1) according to any one of the preceding claims, **characterised in that** the parasites are killed inside the hollow member (1) in which they accumulate.

12. Method according to claim 9, **characterised in that** the inner surface of the hollow member (1) is heated by activating the means to a temperature which is suitable for killing the parasites, preferably to a temperature of from approximately 50 to approximately 100°C.

13. Method according to claim 9 or claim 10, **characterised in that** the inner surface of the hollow member (1), by activating the means for from approximately 10 to approximately 15 seconds, has a temperature which is suitable for killing the parasites, preferably a temperature of from approximately 50 to approximately 100°C.

14. Use of a perch (11) for birds for combating parasites, having at least one opening (15) in the wall of the perch (11), for receiving the parasites inside the perch (11), and a means which is releasably arranged at the inner side for killing the parasites, **characterised in that** the means is able to be activated in a predetermined manner and emits an electromagnetic radiation.

15. Use according to claim 14, **characterised in that** the electromagnetic radiation emitted by the means to kill the parasites is heat radiation, infrared radiation, ultraviolet radiation or microwave radiation.

## Revendications

1. Corps creux allongé (1) pour lutter contre des parasites dans un abri pour oiseaux, comprenant au moins une ouverture (15) dans la paroi du corps creux (1), pour recevoir les parasites à l'intérieur du corps creux (1), et un moyen disposé de manière amovible à l'intérieur pour l'extermination des parasites, le moyen pouvant être activé de manière prédéterminée et émettant un rayonnement électromagnétique, et le corps creux (1) étant un élément de siège et demeurant dans l'abri pendant l'extermination des parasites.

2. Corps creux (1) selon la revendication 1, **caractérisé en ce que** le corps creux (1) est un perchoir ou une perche d'approche pour oiseaux, de préférence un perchoir (11) en un lieu de repos à l'intérieur de l'abri.

3. Corps creux (1) selon la revendication 1 ou 2, **caractérisé en ce que** le corps creux (1) présente un diamètre d'environ 0,5 à environ 10 cm, de préférence d'environ 2 à environ 8 cm, de préférence encore d'environ 3 à environ 6 cm.

4. Corps creux (1) selon l'une quelconque des revendications précédentes, **caractérisé en ce que** le corps creux (1) présente plusieurs ouvertures (15) dans la paroi, de préférence à une distance les unes des autres dans la direction longitudinale d'environ 1 à environ 20 cm et de préférence encore avec un diamètre qui vaut 0,2 à 0,3 fois le diamètre du corps creux (1).

5. Corps creux (1) selon l'une quelconque des revendications précédentes, **caractérisé en ce que** le rayonnement électromagnétique est un rayonnement de chaleur, un rayonnement infrarouge, un rayonnement ultraviolet ou un rayonnement micro-ondes.

6. Corps creux (1) selon l'une quelconque des revendications précédentes, **caractérisé en ce que** le moyen présente un conducteur électrique (2) ou une source de rayonnement électromagnétique, de préférence une lampe halogène, une lampe infrarouge (42), une lampe UV ou un émetteur de micro-ondes (32).

7. Corps creux (1) selon la revendication 6, **caractérisé en ce que** le conducteur électrique (2) présente un conducteur électrique métallique (2), de préférence au moins un conducteur chauffant (12).

8. Corps creux (1) selon la revendication 6, **caractérisé en ce que** le moyen comprend un chariot (23) sur lequel est disposée la source de rayonnement électromagnétique, et un dispositif de traction à l'aide duquel le chariot (23) peut être déplacé dans le corps creux (1).

9. Corps creux (1) selon l'une quelconque des revendications précédentes, **caractérisée en ce que** la surface intérieure du corps creux (1) présente, par activation du moyen, une température qui est appropriée pour l'extermination des parasites, de préférence une température d'environ 50 à environ 100 °C.

10. Corps creux (1) selon l'une quelconque des revendications précédentes, **caractérisé en ce que** le moyen présente en outre un dispositif de nettoyage.

11. Procédé pour lutter contre des parasites dans un abri pour oiseaux au moyen d'un corps creux (1) selon l'une quelconque des revendications précédentes, **caractérisé en ce que** les parasites à l'intérieur du corps creux (1), dans lequel ils s'amassent, sont exterminés.

12. Procédé selon la revendication 9, **caractérisé en ce que** la surface intérieure du corps creux (1) est chauffée, par activation du moyen, à une température qui est appropriée pour l'extermination des parasites, de préférence à une température d'environ 50 à environ 100 °C.

13. Procédé selon la revendication 9 ou 10, **caractérisé en ce que** la surface intérieure du corps creux (1) présente, pendant environ 10 à environ 15 sec, une température qui est appropriée pour l'extermination des parasites, de préférence une température d'environ 50 à environ 100 °C.

14. Utilisation d'un perchoir (11) pour oiseaux pour lutter contre des parasites, comprenant au moins une ouverture (15) dans la paroi du perchoir (11), pour recevoir les parasites à l'intérieur du perchoir (11), et un moyen disposé de manière amovible à l'intérieur pour l'extermination des parasites, **caractérisée en ce que** le moyen peut être activé de manière prédéterminée et émet un rayonnement électromagnétique.

15. Utilisation selon la revendication 14, **caractérisée en ce que** le rayonnement électromagnétique émis par le moyen pour l'extermination des parasites est un rayonnement de chaleur, un rayonnement infrarouge, un rayonnement ultraviolet ou un rayonnement micro-ondes.
